Europäisches Patentamt

European Patent Office

Office européen des brevets

(11) Veröffentlichungsnummer: **0 433 688 A1**

## (12) EUROPÄISCHE PATENTANMELDUNG

(21) Anmeldenummer: 90122281.0

(22) Anmeldetag: 22.11.90

(51) Int. Cl.5: **H01R 23/68**

(30) Priorität: 21.12.89 DE 3942289

(43) Veröffentlichungstag der Anmeldung:
26.06.91 Patentblatt 91/26

(84) Benannte Vertragsstaaten:
**DE FR GB**

(71) Anmelder: **STOCKO Metallwarenfabriken
Henkels und Sohn GmbH & Co
Kirchhofstrasse 52a
W-5600 Wuppertal 1(DE)**

(72) Erfinder: **Rauterberg, Paul-Georg, Dipl.-Ing.
Bahnstrasse 129**

**W-5600 Wuppertal 11(DE)**
Erfinder: **Hiemstra, Franz-G., Dipl.-Ing.
Im Speessiefen 5
W-5375 Hellenthal(DE)**
Erfinder: **Ribbeck, Horst, Dipl.-Ing.
Gerberstrasse 5
W-5600 Wuppertal 1(DE)**

(74) Vertreter: **Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11(DE)**

(54) **Vorrichtung zum elektrischen Kontaktieren einer längs einer ihrer Seiten Anschlusspole aufweisenden, elektronischen Karte, insbesondere IC-Memory-Karte, mit einer Basisleiterplatte.**

(57) Eine Vorrichtung zum elektrischen Kontaktieren einer längs einer ihrer Seiten Anschlußpole 2 aufweisenden, elektronischen Karte 3, insbesondere IC-Memory-Karte, mit einer Basisleiterplatte 1 weist ein Gehäuse 5 auf, welches die kontaktierte Karte 3 vollständig aufnimmt. Das Gehäuse 5 besteht aus einem auf der Basisleiterplatte 1 befestigten Boden 6 sowie aus einem dazu unter einen spitzen Winkel angeordneten Deckel 7. Nach Einschieben der Karte 3 in das Gehäuse 5 durch einen Einführschlitz 24 hindurch, wobei die Karte 3 auf den Boden 6 aufliegt, wird die Karte 3 bis zur Unterseite des Deckels 7 hochgeklappt und dort mittels einer Rasteinrichtung 20 fixiert.

Fig. 2

EP 0 433 688 A1

## VORRICHTUNG ZUM ELEKTRISCHEN KONTAKTIEREN EINER LÄNGS EINER IHRER SEITEN ANSCHLUSS- POLE AUFWEISENDEN, ELEKTRONISCHEN KARTE, INSBESONDERE IC-MEMORY-KARTE, MIT EINER BA- SISLEITERPLATTE

Die Erfindung betrifft eine Vorrichtung zum elektrischen Kontaktieren einer längs einer ihrer Seiten Anschlußpole aufweisenden, elektronischen Karte, insbesondere IC-Memory-Karte, mit einer Basisleiterplatte, mit einem auf der Basisleiterplatte befestigten, einen Boden sowie einen Deckel aufweisenden Gehäuse, in das die Karte diese im kontaktierten Zustand vollständig aufnehmend durch einen in der Stirnwand des Gehäuses ausgebildeten Einführschlitz mit den Anschlußpolen voran unter Nullkraft einschiebbar und unter Kontaktierung mit Kontaktfedern des Gehäuses in eine Rastposition verschwenkbar ist, wobei die Kontaktierfedern auf der zu dem Einführschlitz gegenüberliegenden Seite zu den Anschlußpolen der Karte korrespondierend angeordnet sind und wobei nach dem Einschieben der Karte, jedoch vor dem Verschwenken die Karte mit ihren Anschlußpolen noch ohne elektrischen Kontakt mit den Kontaktierfedern ist.

In der Büro- und Datentechnik, im Computerbereich etc. werden sogenannte IC-Memory-Karten verwendet. Auf diesen sind spezifische Daten abgespeichert, welche mittels einer kompatiblen Datenverarbeitungsanlage verarbeitet werden. Zu diesem Zweck wird die IC-Memory-Karte an das Datenverarbeitungssystem angeschlossen, so daß ein entsprechender Datentransfer stattfinden kann.

Aus der DE-OS 35 31 318 ist eine Kontaktiereinrichtung für eine Chip-Karte der eingangs angegebenen Art bekannt. Die Kontaktiereinrichtung besteht dabei aus einem im wesentlichen quaderförmigen Gehäuse mit einem Boden sowie einem dazu parallelen Deckel. Stirnseitig ist das Gehäuse mit einem Einführschlitz zum Einführen der zu kontaktierenden Karte versehen. Innerhalb des Gehäuses ist eine Art Wippe um eine horizontale Achse verschwenkbar gelagert, die sich im wesentlichen in der Längsmitte des Gehäuses erstreckt. In der Grundstellung der Wippe befindet sich diese direkt hinter dem Einführschlitz, so daß die durch diesen Einführschlitz eingeschobene Karte auf der Wippe zu liegen kommt, wobei die eingeschobene Karte mit ihren Anschlußpolen noch nicht im elektrischen Kontakt mit den Kontaktierelementen des Gehäuses steht. Zu diesem Zweck muß die Wippe um ihre Drehachse verschwenkt werden, so daß die elektrische Kontaktierung hergestellt ist. Gleichzeitig wird die Wippe mit dem Gehäuse verrastet.

Bei dieser bekannten Kontaktiereinrichtung für eine Chip-Karte ist zunächst von Nachteil, daß für die Aufnahme der Karte innerhalb des Gehäuses eine verschwenkbare Wippenkonstruktion vorgesehen ist. Um die zu kontaktierende Karte in das Gehäuse einschieben zu können, muß jederzeit gewährleistet sein, daß die Wippe immer exakt hinter dem Einführschlitz liegt, so daß eine entsprechende Einrichtung zwischen der Wippe und dem eigentlichen Gehäuse vorgesehen sein muß. Darüber hinaus ist die Anordnung einer verschwenkbaren Wippe innerhalb des Gehäuses technisch aufwendig. Zum anderen besteht aufgrund der wippenartigen Lagerung der Karte innerhalb des Gehäuses die Gefahr der Instabilität. Dies gilt insbesondere dann, wenn nach längerem Gebrauch die Drehlagerung der Wippe aufgrund von Verschleißerscheinungen ausleiert und somit eine richtige Kontaktierung nicht mehr gewährleistet ist. Verschleißerscheinungen in der Drehlagerung können beispielsweise dann auftreten, wenn die Karte zu fest eingeschoben und zu stark verschwenkt wird.

Aus der US-PS 4 737 120 ist eine Vorrichtung zum elektrischen Kontaktieren einer längs einer ihrer Seiten Anschlußpole aufweisenden, elektronischen Karte mit einer Basisleiterplatte bekannt. Die Vorrichtung weist ein auf der Basisleiterplatte befestigtes, einteiliges Gehäuse aus Kunststoff auf. In diesem Gehäuse sind in einer Reihe hintereinander Kontaktierfedern angeordnet, die mit den Anschlußpolen der zu kontaktierenden Karte korrespondieren. Diese Kontaktierfedern weisen dabei Anschlußstifte auf, die mit den entsprechenden Leiterbahnen auf der Basisleiterplatte elektrisch kontaktiert sind. In dieses Gehäuse wird die Karte mit ihren Anschlußpolen voran unter Nullkraft schräg eingeschoben, wobei unter "Nullkraft" zu verstehen ist, daß hierfür keine oder nur eine sehr geringe Kraft benötigt wird. Nach dem vollständigen Einschieben der Karte in das Gehäuse wird die Karte verschwenkt und in ihrer Verschwenkposition im Gehäuse lagefixiert, welches zu diesem Zweck seitliche Auflaufschrägen aufweist.

Bei dieser bekannten Vorrichtung ist zunächst von Nachteil, daß die zu kontaktierende Karte schräg in das Gehäuse eingeführt werden muß, wobei allerdings kein bestimmter Einschiebewinkel konstruktiv vorgegeben ist. Dies bedeutet, daß es sehr leicht passieren kann, daß der Benutzer nicht im richtigen Winkel die Karte in das Gehäuse einschiebt, so daß es zu Verkantungen mit der Gefahr der Beschädigung der Kontaktierfedern kommen kann.

Darüber hinaus kann dann, wenn die Karte nicht im richtigen Winkel eingeschoben wird, diese nicht mit der sogenannten Nullkraft in das Gehäuse eingeführt werden. Zum anderen ist bei der bekannten Vorrichtung von Nachteil, daß das obere Ende der Karte im Kontaktierzustand über das Gehäuse übersteht, so daß bei einer unsachgemäßen Handhabung sowie durch Versehen die Karte aus ihrer vorgegebenen Kontaktierposition verschoben werden kann, so daß das System nicht mehr funktioniert.

Davon ausgehend liegt der Erfindung die **Aufgabe** zugrunde, die bekannte Vorrichtung zum elektrischen Kontaktieren einer elektronischen Karte, insbesondere einer IC-Memory-Karte, mit einer Basisleiterplatte der eingangs angegebenen Art derart weiterzubilden, daß das Einschieben der Karte in das Gehäuse sowie die Lagefixierung innerhalb des Gehäuses nach dem Kontaktieren verbessert ist.

Als technische **Lösung** wird mit der Erfindung vorgeschlagen, daß der Deckel unter einem spitzen Winkel zum Boden angeordnet ist und die Kontaktierfedern längs der zu dem Einführschlitz gegenüberliegenden Scheitellinie auf dem Boden angeordnet sind und daß die Karte auf dem Boden aufliegend in das Gehäuse einschiebbar und anschließend bis zur planen Anlage an der Unterseite des Deckels hochklappbar ist, wobei die Drehachse im Bereich der Scheitellinie liegt.

Eine nach dieser technischen Lehre ausgebildete Vorrichtung zum elektrischen Kontaktieren einer elektronischen Karte mit einer Basisleiterplatte hat den Vorteil, daß die Karte problemlos in das Gehäuse eingeschoben werden kann, indem die Karte während des Einschiebens auf dem Boden aufliegt. Dabei ist immer gewährleistet, daß durch die Auflage auf dem Boden die Karte immer eingeschoben werden kann. Da die Kontaktfedern auf dem Boden des Gehäuses angeordnet sind, können sie in der Art eines L-förmigen Winkels ausgebildet sein, wobei der eine Schenkel auf dem Boden aufliegt, während der andere Schenkel den Boden des Gehäuses sowie entsprechende Bohrungen in der Basisleiterplatte durchragend mit letzterer verlötet sein kann. Die Karte wird dabei bis zu einem Anschlag eingeschoben, welcher durch das Gehäuse gebildet ist und der im Scheitelbereich des Gehäuses liegt. Zum eigentlichen Kontaktieren der Anschlußpole der Karte mit den Kontaktierfedern des Gehäuses sowie zum Fixieren der Karte innerhalb des Gehäuses ist es dann lediglich notwendig, die Karte hochzuklappen, wobei der Scheitelbereich des Gehäuses mit dem Gehäuseanschlag als Drehpunkt dient. Sobald die Karte die Unterseite des Deckels erreicht hat, der im übrigen unter einem konstanten Winkel bezüglich zum Boden des Gehäuses aufgrund dessen Einteiligkeit ausgerichtet ist, erfolgt die Verrastung der Karte in dieser Position. Durch die Anlage der Karte an der Unterseite des Deckels sowie durch die Abstützung der Vorderkante der Karte im Bereich des vorderen Gehäuseanschlages bzw. im Bereich der Drehachse ist eine sehr sichere und unveränderbare Positionierung der Karte innerhalb des Gehäuses ohne irgendwelche Instabilitäten geschaffen.

In einer Weiterbildung des Gehäuses weist dessen Boden vorzugsweise querverlaufende Auflageleisten auf. Diese dienen der Führung der einzuschiebenden Karte und verhindern ein falsches Einstecken sowie ein Durchfallen der Karte nach unten.

Um ein Ausreißen der Lötaugen an der Basisleiterplatte beim Hochdrücken der Karte in die Endposition zu verhindern, weist der Boden zum Befestigen auf der Basisleiterplatte im Bereich der beiden Längsseiten des Gehäuses seitlich abstehende Befestigungsfahnen mit Schraubenöffnungen auf. Die Haltekraft des Gehäuses auf der Basisleiterplatte wird somit durch die Befestigungsschrauben erzielt.

Vorzugsweise sind dabei die Befestigungsfahnen an den beiden Seiten versetzt zueinander angeordnet. Damit kann eine sehr enge Packungsdichte erreicht werden.

In einer Weiterbildung weist der Boden zwischen den Kontaktierfedern vorzugsweise diesen überragend Rippen auf. Diese schaffen ausreichende Luft- und Kriechstrecken, die in der Einsetzposition der Karte in das Gehäuse ein Berühren der Anschlußpole mit den Kontaktierfedern verhindern und beim Hochklappen der Karte einen definierten Federweg freigeben, wodurch die Federkraft genau bestimmt werden kann.

In einer bevorzugten Weiterbildung der Kontaktierfedern des Gehäuses sind diese vorzugsweise als Blattfedern ausgebildet. Derartige Blattfedern lassen sich technisch ohne großen Aufwand herstellen und stellen auf sichere Weise den elektrischen Kontakt mit den Anschlußpolen der Karte her.

In einer Weiterbildung des Deckels weist dieser vorzugsweise querverlaufende Leisten auf. Diese dienen als Anschlag beim Hochklappen der Karte in der Kontaktierposition.

In einer bevorzugten Weiterbildung des Deckels weist dieser einen Federarm auf, welcher in der verrasteten Position der Karte gegen diese drückt. Ein derartiger Federarm hat den Vorteil, daß er die Karte in ihrer Kontaktierposition unter Druck in die Endrastung ohne Spiel drückt, so daß eine sichere Lagefixierung der kontaktierten Karte innerhalb des Gehäuses gewährleistet ist. Bei Entriegelung zum Zwecke der Entnahme der Karte wirft der Federarm diese mit Druck in die Einsetzposition zurück, so daß dadurch eine problemlose Entnahme der Karte möglich ist.

In einer ersten Alternative kann dabei der Federarm einstückig mit dem Deckel ausgebildet sein. Durch Hochklappen der Karte kommt somit der Federarm des Deckels unter Vorspannung und drückt mit seinem freien Ende auf diese Weise gegen die Karte. Die einstückige Ausbildung des Federarms mit dem Deckel läßt sich technisch sehr einfach bewerkstelligen.

In einer alternativen Ausführung kann der Federarm auch als um eine Achse frei schwenkbarer Wipparm mit einer an diesem angreifenden Feder ausgebildet sein. In dieser Ausführungsform des Federarmes in Form eines Wipparmes ist dieser ein separates Bauteil, welches entsprechend im Deckel des Gehäuses gelagert wird. Die zwischen dem Deckel und dem Wipparm sich abstützende Feder liefert die notwendige Federspannung, um aus dem Wipparm einen Federarm zu bilden, der im verrasteten Zustand gegen die Karte drückt.

In einer bevorzugten Weiterbildung ist die Rasteinrichtung zum Fixieren der Karte in ihrer hochgeklappten Kontaktierposition durch einen am Gehäuse, insbesondere am Deckel verschwenkbar angeordneten Hebel mit einer Rastnase gebildet, die nach Hochklappen der Karte deren Rand untergreift und die Karte dabei festhält. Die Rasteinrichtung in Form des Hebels greift dabei an demjenigen Rand an, welcher dem Rand gegenüberliegt, welcher am Gehäuseanschlag längs der Scheitellinie anliegt. Grundsätzlich ist es denkbar, den Hebel mit seiner Rastnase einstückig mit dem Gehäuse auszubilden, so daß dadurch ein Torsions-Schnapphaken gebildet ist, der gleichzeitig mit dem Spritzen des Kunststoffgehäuses ausgebildet werden kann. Alternativ ist es aber auch denkbar, den Hebel als separates Bauteil auszubilden und diesen verschwenkbar am Gehäuse zu lagern, wobei zusätzlich noch eine Feder vorgesehen sein muß, welche den Hebel in der Rastposition hält. Dem Hebel in der einen oder in der anderen Form ist dabei vorzugsweise ein Anschlag zugeordnet, welcher die Verschwenkbewegung des Hebels beschränkt. Durch Betätigen des Hebels in die entgegengesetzte Schnapprichtung kann die Karte für den Entnahmevorgang wieder freigegeben werden, so daß diese in die Einsetzposition zurückspringt.

In einer bevorzugten Weiterbildung des Hebels ist dieser zweiarmig ausgebildet. Dies bringt den Vorteil mit sich, daß durch Drücken auf den freien Hebelarm, welcher nicht mit der Rastnase versehen ist, der Hebel in die Entriegelungsposition verschwenkt werden kann.

Um schließlich eine Kartenseitenbegrenzung zu schaffen, weist das Gehäuse in einer Weiterbildung vorzugsweise Seitenwände auf.

In einer weiteren Weiterbildung des Gehäuses weist dieses im Bereich der Scheitellinie eine Auswurfeinrichtung für die Karten auf. Diese besteht vorzugsweise aus einer Feder insbesondere aus Kunststoff oder Metall. Eine derartige Auswurfeinrichtung bringt den Vorteil mit sich, daß nach Lösen der Rasteinrichtung die Karte nach unten fällt und dabei mittels der Auswurfeinrichtung anschließend durch den Einführschlitz hindurch verschoben wird, so daß ein einfaches Fassen der Karte mit den Fingern möglich wird. Die Kartenentnahme wird somit mittels der Auswurfeinrichtung erleichtert.

Schließlich wird in einer Weiterbildung der Kontaktiervorrichtung vorgeschlagen, daß die Kontaktierfedern des Gehäuses zweireihig mit insbesondere halbem Rasterversatz angeordnet sind. Es ist aber auch denkbar, unterschiedliche Rasterabstände zu erzielen.

Ein Ausführungsbeispiel einer erfindungsgemäßen Vorrichtung zum elektrischen Kontaktieren einer IC-Memory-Karte mit einer Basisleiterplatte wird nachfolgend anhand der Zeichnungen beschrieben. In diesen zeigt:

Fig. 1    eine Seitenansicht der Vorrichtung nach Einschieben einer zu kontaktierenden Karte;

Fig. 2    die Vorrichtung aus Fig. 1 nach Hochklappen der Karte und Verrasten in der Kontaktierposition;

Fig. 3    eine Draufsicht auf die Vorrichtung in Fig. 1;

Fig. 4    eine hälftige Stirnansicht der Vorrichtung in Fig. 1 von rechts;

Fig. 5    eine hälftige Seitenansicht der Vorrichtung in Fig. 1 von links;

Fig. 6    eine Seitenansicht einer alternativen Vorrichtung mit einer zweireihigen Anordnung der Kontaktierfedern nach Einschieben einer zu kontaktierenden Karte;

Fig. 7    die alternative Vorrichtung aus Fig. 6 nach Hochklappen der Karte und Verrasten in der Kontaktierposition;

Fig. 8    eine Draufsicht auf die alternative Vorrichtung in Fig. 6.

Eine Basisleiterplatte 1 ist Bestandteil einer nicht dargestellten Datenverarbeitungseinheit. Mit den Leiterbahnen dieser Basisleiterplatte 1 sollen die Anschlußpole 2 einer elektronischen Karte 3 in Form einer sogenannten IC-Memory-Karte elektrisch verbunden werden, so daß ein entsprechender Datentransfer durchgeführt werden kann. Die Anschlußpole 2 der Karte 3 sind dabei längs eines der vier Ränder 4 in einer Reihe hintereinander angeordnet.

Die Kontaktiervorrichtung besteht aus einem einteiligen Gehäuse 5 aus Kunststoff. Dieses besitzt einen Boden 6 sowie einen im spitzen Winkel dazu einstückig angeordneten Deckel 7. Auf der der Scheitellinie S gegenüberliegenden Seite weist das Gehäuse 5 eine Stirnwand 8 auf, welche den Deckel 7 mit dem Boden 6 verbindet. Schließlich weist das Gehäuse 5 noch Seitenwände 9 auf.

Mittels des Bodens 6 ist das Gehäuse 5 auf der Basisleiterplatte 1 befestigt. Zu diesem Zweck dienen im Bereich der Seitenwände 9 seitlich abstehende Befestigungsfahnen 10, welche jeweils eine Schraubenöffnung 11 aufweisen, durch die hindurch der Boden 6 des Gehäuses 5 auf der Basisleiterplatte 1 festgeschraubt werden kann. Die Befestigungsfahnen 10 im Bereich der beiden Seitenwände 9 sind dabei versetzt zueinander angeordnet, so daß auf diese Weise eine enge Packungsdichte erzielt werden kann.

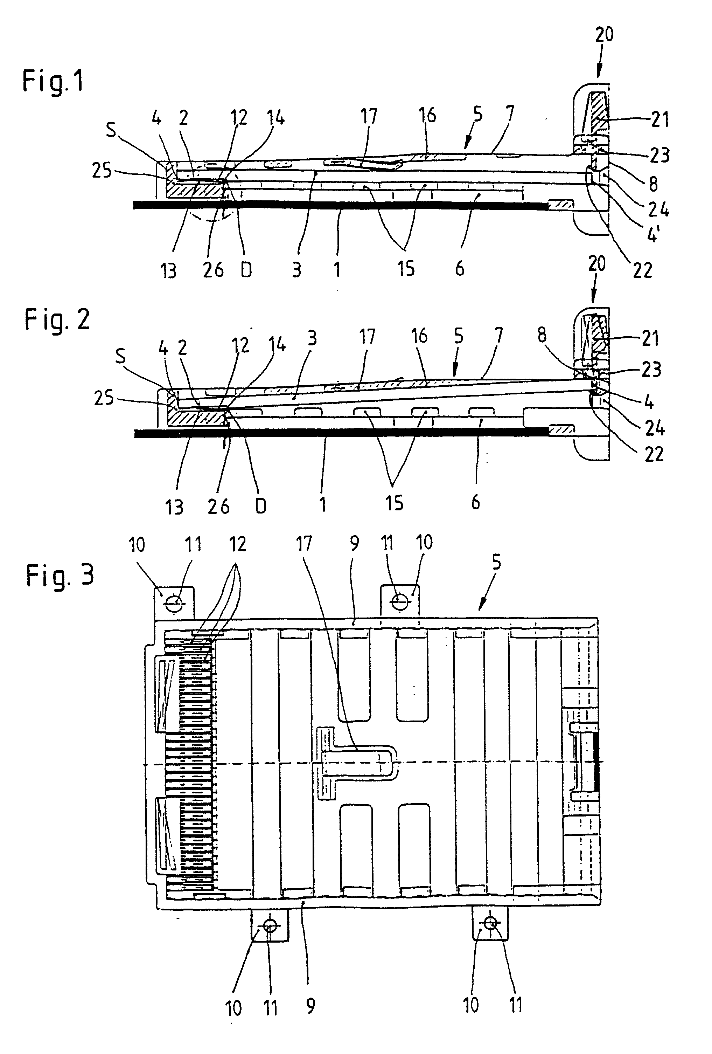

Weiterhin ist der Boden 6 des Gehäuses 5 durch Kontaktierfedern 12 auf der Basisleiterplatte 1 befestigt, die zudem den elektrischen Anschluß an die Leiterbahnen der Basisleiterplatte 1 bilden. Die Kontaktierfedern 12 sind dabei winklig in der Form eines "L" ausgebildet, wobei der eine Schenkel auf dem Boden 6 des Gehäuses 5 in dessen Längsrichtung aufliegt, während der andere Schenkel durch den Boden 6 hindurch durch entsprechende Bohrungen in der Basisleiterplatte 1 geführt ist, wobei die Fixierung durch Verlöten auf der Unterseite der Basisleiterplatte 1 erfolgt, wodurch gleichzeitig auch der Kontakt mit den entsprechenden Leiterbahnen der Basisleiterplatte 1 hergestellt ist. Im Bereich des freien Endes des auf dem Boden 6 aufliegenden Schenkels der Kontaktierfedern 12 ist eine wellenförmige Erhebung 13 vorgesehen. Im übrigen sind sämtliche Kontaktierfedern 12 des Gehäuses 5 in einer Reihe hintereinander parallel zueinander ausgerichtet angeordnet. Dies ist insbesondere in der Draufsicht gemäß Fig. 3 erkennbar. Zwischen den auf dem Boden 6 aufliegenden Schenkeln der Kontaktierfedern 12 ist dabei jeweils eine überstehende Rippe 14 ausgebildet.

Der Boden 6 des Gehäuses 5 selbst weist querverlaufende Auflageleisten 15 auf, wie die Seitenansichten in Fig. 1 und 2 erkennen lassen. Entsprechend weist der Deckel 7 des Gehäuses 5 ebenfalls querverlaufende Leisten 16 auf. Dieser Deckel 7 weist weiterhin einen Federarm 17 auf, der einstückig am Deckel 7 angeformt ist und bei nicht kontaktierter Karte 3 ins Innere des Gehäuses 5 ragt.

Im Bereich des freien Endes des Deckels 7 im Bereich der Stirnwand 8 ist eine Rasteinrichtung 20 vorgesehen. Diese besteht aus einem einstückig mit dem Gehäuse 5 ausgebildeten, doppelarmigen Hebel 21 in Form eines sogenannten Torsions-Schnapphakens, der am einen freien Ende eine ins Innere des Gehäuses 5 gerichtete Rastnase 22 aufweist. Auf der anderen Seite dieser Rastnase 22 ist diesem Hebelarm ein Anschlag 23 des Gehäuses 5 zugeordnet.

Die Vorrichtung funktioniert wie folgt:

Zum Kontaktieren einer Karte 3 wird diese durch einen in der Stirnwand 8 des Gehäuses 5 ausgebildeten Einführschlitz 24 hindurch in das Gehäuse 5 derart eingeschoben, daß die Karte 3 auf den Auflageleisten 15 des Bodens 6 aufliegend gleitet. Die Karte 3 wird mit ihren Anschlußpolen 2 voran so weit in das Gehäuse 5 eingeschoben, daß der Rand 4 an einem Gehäuseanschlag 25 im Bereich der Scheitellinie S zur Anlage kommt. Da die Karte 3 im Bereich der Anschlußpole 2 eine Dickenverminderung besitzt, liegen in dieser Position der Karte 3 deren Anschlußpole 2 mit Abstand oberhalb der Kontaktfedern 12 des Gehäuses 5, so daß in dieser Position noch keine elektrische Kontaktierung hergestellt ist. Während des Einschiebens wird der Federarm 17 etwas verschwenkt, wobei in Fig. 1 sowohl die Stellung des Federarms 17 ohne eingeschobene Karte 3 als auch die Stellung des Federarms 17 mit eingeschobener Karte 3 dargestellt ist.

Nach dem Einschieben der Karte 3 in das Gehäuse 5 wird die Karte 3 mit dem Finger nach oben verschwenkt, wobei die Scheitellinie S im Bereich des Gehäuseanschlags 25 als Verschwenkachse dient. Die Karte 3 wird dabei so lange nach oben gedrückt, bis sie mit ihrer Oberseite an der Unterseite der Leisten 16 des Deckels 7 zur Anlage kommt. In dieser Position passiert dreierlei: erstens verrastet der dem Rand 4 gegenüberliegende Rand 4' der Karte 3 mit der Rastnase 22 des Hebels 21 zur Lagefixierung, zweitens wird der Federarm 17 entgegen seiner Federkraft weiter derart in die Ebene des Deckels 7 verschwenkt, daß der Federarm 17 auf der Oberseite der Karte 3 zu liegen kommt und diese durch den Federarm 17 nach unten gedrückt wird und schließlich drittens erfolgt durch die Verschwenkbewegung der Karte 3 eine Kontaktierung deren Anschlußpole 2 mit den Kontaktierfedern 12 des Gehäuses. Wie in Fig. 1 und 2 erkennbar ist, dient dabei als Drehachse D eine querverlaufende Rippe 26 des Bodens 6, auf welcher die Karte 3 im Bereich des Übergangs zur verminderten Dicke aufliegt. Die Karte 3 hat somit insgesamt wenigstens drei Auflagepunkte, nämlich im Bereich der Rasteinrichtung 20, durch den Federarm 17 sowie im Bereich der Drehachse D, so daß eine gleichmäßige Belastung erzielt wird.

Um die Karte 3 zur Entkontaktierung wieder aus dem Gehäuse 5 herausnehmen zu können, wird der Hebel 21 an seinem freien Ende in Fig. 1 und 2 in entgegengesetzter Uhrzeigerrichtung gedrückt, so daß die Rastnase 22 den Rand 4' der Karte 3 freigibt, so daß diese aufgrund der Kraft des Federarmes 17 sowie aufgrund des Eigengewichts der Karte 3 nach unten fällt, so daß die Position in Fig. 1 wieder erreicht wird. Da das Gehäuse 5 im Bereich der Scheitellinie S zusätzlich mit einer Auswurfeinrichtung 27 in Form zweier Federn 28, welche als Blattfedern ausgebildet sind, versehen ist, wird durch diese die Karte 3 etwas durch den Einführschlitz 27 hindurchgeschoben. Beim Hineinschieben der Karte 3 in das Gehäuse 5 sind nämlich die beiden Federn 28 der Auswurfeinrichtung 27 unter Spannung vesetzt worden. Anschließend kann die Karte 3 durch den Einführschlitz 24 in der Stirnwand 8 des Gehäuses 5 problemlos herausgezogen werden.

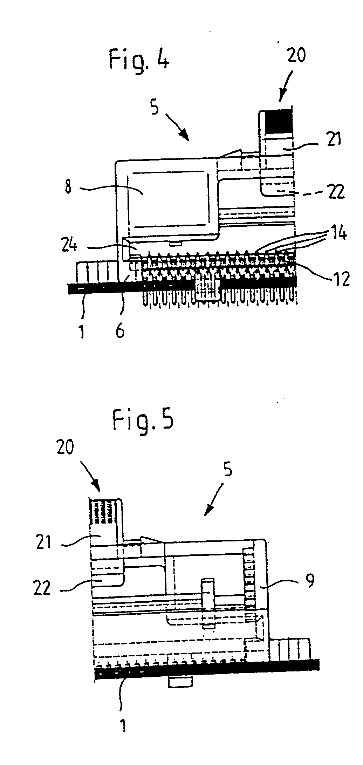

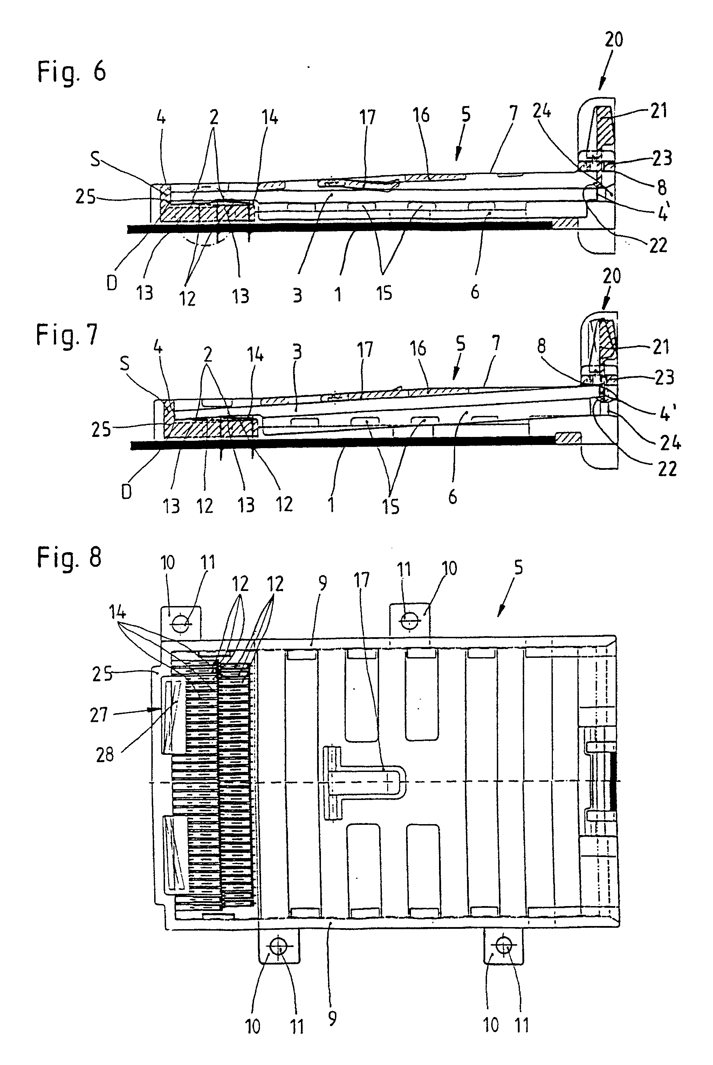

In den Fig. 6 bis 8 ist eine alternative Ausführungsform dargestellt. Diese unterscheidet sich von der ersten Ausführungsform in den Fig. 1 bis 5 zum einen dadurch, daß die Kontaktierfedern 12 zweireihig mit halbem Rasterversatz angeordnet sind. Entsprechend sind die Anschlußpole 2 der Karte 3 angeordnet. Zum anderen ist der Boden 6 des Gehäuses 5 zum Verrasten der Karte 3 zusammen mit dieser hochklappbar, indem die Karte 3 auf dem Boden 6 aufliegt.

Bezugszeichenliste
_____

| 1 | Basisleiterplatte |
| 2 | Anschlußpol |
| 3 | Karte |
| 4 | Rand |
| 4' | Rand |
| 5 | Gehäuse |
| 6 | Boden |
| 7 | Deckel |
| 8 | Stirnwand |
| 9 | Seitenwand |
| 10 | Befestigungsfahne |
| 11 | Schraubenöffnung |
| 12 | Kontaktierfeder |
| 13 | Erhebung |
| 14 | Rippe |
| 15 | Auflageleiste |
| 16 | Leiste |
| 17 | Federarm |
| 20 | Rasteinrichtung |
| 21 | Hebel |
| 22 | Rastnase |
| 23 | Anschlag |
| 24 | Einführschlitz |
| 25 | Gehäuseanschlag |
| 26 | Rippe |
| 27 | Auswurfeinrichtung |
| 28 | Feder |
| S | Scheitellinie |
| D | Drehachse |

**Ansprüche**

1. Vorrichtung zum elektrischen Kontaktieren einer längs einer ihrer Seiten Anschlußpole (2) aufweisenden, elektronischen Karte (3), insbesondere IC-Memory-Karte, mit einer Basisleiterplatte (1),

mit einem auf der Basisleiterplatte (1) befestigten, einen Boden (6) sowie einen Deckel (7) aufweisenden Gehäuse (5), in das die Karte (3) diese im kontaktierten Zustand vollständig aufnehmend durch einen in der Stirnwand (8) des Gehäuses (5) ausgebildeten Einführschlitz (24) mit den Anschlußpolen (2) voran unter Nullkraft einschiebbar und unter Kontaktierung mit Kontaktierfedern (12) des Gehäuses (5) in eine Rastposition verschwenkbar ist,
wobei die Kontaktierfedern (12) auf der zu dem Einführschlitz (24) gegenüberliegenden Seite zu den Anschlußpolen (2) der Karte (3) korrespondierend angeordnet sind und
wobei nach dem Einschieben der Karte (3), jedoch vor dem Verschwenken die Karte (3) mit ihren Anschlußpolen (2) noch ohne elektrischen Kontakt mit den Kontaktierfedern (12) ist,
**dadurch gekennzeichnet,**
daß der Deckel (7) unter einem spitzen Winkel zum Boden (6) angeordnet ist und die Kontaktierfedern (12) längs der zu dem Einführschlitz (24) gegenüberliegenden Scheitellinie (S) auf dem Boden (6) angeordnet sind und
daß die Karte (3) auf dem Boden (6) aufliegend in das Gehäuse (5) einschiebbar und anschließend bis zur planen Anlage an der Unterseite des Deckels (7) hochklappbar ist, wobei die Drehachse (D) im Bereich der Scheitellinie (S) liegt.

2. Vorrichtung nach Anspruch 1, dadurch gekennzeichnet, daß der Boden (6) querverlaufende Auflageleisten (15) aufweist.

3. Vorrichtung nach Anspruch 1 oder 2, dadurch gekennzeichnet, daß der Boden (6) zum Befestigen auf der Basisleiterplatte (1) im Bereich der beiden Längsseiten des Gehäuses (5) seitlich abstehende Befestigungsfahnen (10) mit Schraubenöffnungen (11) aufweist.

4. Vorrichtung nach Anspruch 3, dadurch gekennzeichnet, daß die Befestigungsfahnen (10) an den beiden Seiten versetzt zueinander angeordnet sind.

5. Vorrichtung nach einem der Ansprüche 1 bis 4, dadurch gekennzeichnet, daß der Boden (6) zwischen den Kontaktierfedern (12) diese überragend Rippen (14) aufweist.

6. Vorrichtung nach einem der Ansprüche 1 bis 5, dadurch gekennzeichnet, daß die Kontaktierfedern (12) als Blattfedern ausgebildet sind.

7. Vorrichtung nach einem der Ansprüche 1 bis 6, dadurch gekennzeichnet, daß der Deckel (7) querverlaufende Leisten (16) aufweist.

8. Vorrichtung nach einem der Ansprüche 1 bis 7, dadurch gekennzeichnet, daß der Deckel (7) einen Federarm (17) aufweist, welcher in der verrasteten Position der Karte (3) gegen diese drückt.

9. Vorrichtung nach Anspruch 8, dadurch gekennzeichnet, daß der Federarm (17) einstückig mit dem Deckel (7) ausgebildet ist.

10. Vorrichtung nach Anspruch 8, dadurch gekennzeichnet, daß der Federarm (17) als um eine Achse frei schwenkbarer Wipparm mit einer an diesem angreifenden Feder ausgebildet ist.

11. Vorrichtung nach einem der Ansprüche 1 bis 10, dadurch gekennzeichnet, daß die Rasteinrichtung (20) zum Fixieren der Karte (3) in ihrer hochgeklappten Kontaktierposition durch einen am Gehäuse (5), insbesondere am Deckel (7) verschwenkbar angeordneten Hebel (21) mit einer Rastnase (22) gebildet ist, die nach Hochklappen der Karte (3) deren Rand (4') untergreift und die Karte (3) dabei festhält.

12. Vorrichtung nach Anspruch 11, dadurch gekennzeichnet, daß der Hebel (21) zweiarmig ausgebildet ist.

13. Vorrichtung nach einem der Ansprüche 1 bis 12, dadurch gekennzeichnet, daß das Gehäuse (5) Seitenwände (9) aufweist.

14. Vorrichtung nach einem der Ansprüche 1 bis 13, dadurch gekennzeichnet, daß das Gehäuse (5) im Bereich der Scheitellinie (S) eine Auswurfeinrichtung (27) für die Karten (3) aufweist.

15. Vorrichtung nach Anspruch 14, dadurch gekennzeichnet, daß die Auswurfeinrichtung (27) aus einer Feder (28) aus Kunststoff oder Metall besteht.

16. Vorrichtung nach einem der Ansprüche 1 bis 15, dadurch gekennzeichnet, daß die Kontaktierfedern (12) des Gehäuses (5) zweireihig mit insbesondere halbem Rasterversatz angeordnet sind.

**Fig.1**

**Fig. 2**

**Fig. 3**

Fig. 4

Fig. 5

Fig. 6

Fig. 7

Fig. 8

Europäisches Patentamt

# EUROPÄISCHER RECHERCHENBERICHT

Nummer der Anmeldung

EP 90 12 2281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | WO-A-8803720 (AMP)<br>* Seite 10, Zeilen 17 - 21; Figuren 1-5 *<br>--- | 1 | H01R23/68 |
| A | EP-A-0158413 (MOLEX)<br>* Seite 4, Zeilen 23 - 25 *<br>* Seite 5, Zeilen 1 - 20; Figuren 1-3 *<br>--- | 1 | |
| D,A | EP-A-0214478 (ALLIED CORPORATION)<br>----- | | |

|  | RECHERCHIERTE SACHGEBIETE (Int. Cl.5 ) |
|---|---|
| | H01R<br>H05K |

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1991 | CERIBELLA G. |